# EUROPEAN PATENT APPLICATION

(11) **EP 2 383 238 A1**
(43) Date of publication of application: **02.11.2011**
(21) Application number: 10161496.4
(22) Date of filing: 29.04.2010
(51) Int. Cl.: C04B 28/18, C04B 38/02, C04B 40/00

(54) **Process for the manufacture of aerated concrete construction materials and construction materials obtained thereof**

(71) Applicant: Solvay SA, 1050 Brussels (BE)
(72) Inventor: Massa, Giorgio, 57016, ROSIGNANO SOLVAY (LI) (IT); Seccombe, Rodney, 1560 HOEILAART (BE); Dournel, Pierre, 1030 BRUSSELS (BE)
(74) Representative: Vande Gucht, Anne

(57) **Abstract**

Process for the manufacture of aerated concrete construction materials comprising the following steps:
a. mixing a composition comprising at least water, a cementitious material, calcium oxide, a compound comprising reactive silicon dioxide, a source of oxygen, and a compound selected from sodium carbonate, sodium bicarbonate and sodium hydroxide,
b. pouring the mixture of step (a) into a mould and allowing the mixture to set, thus forming a stiffened body,
c. removing the stiffened body from the mould,
d. optionally cutting and shaping the stiffened body, and
e. curing the stiffened body.

## Description

The present invention relates to a process for the manufacture of aerated concrete construction materials and construction materials obtained thereof, especially to a process for the manufacture of blocks, and bricks.

The possibility of producing aerated (or cellular or porous or enlightened or light weight) construction materials by addition of a foaming agent (or gas generating agent) is well known. The gas generated forms bubbles which remain in the mass of the construction material during setting and provide for the porosity of the material, which remains present after curing.

The market for enlightened materials is currently growing. It has been proved that a correlation exists between air-entrained (or aerated or porous or low density) building materials and improved insulating properties, including thermal insulation, soundproof and fire resistance. The use of air-entrained materials also reduces the transport costs of the building materials up to their destination. The use of air-entrained materials also increases the longevity of the resulting building. Furthermore, low density materials have been found suitable for construction in seismic regions.

In this field, aerated concrete and especially aerated autoclaved concrete (AAC), also known as autoclave cellular concrete, is well known. AAC was discovered in the early 1900's and is a lightweight, usually precast building material which provides structure, insulation, fire and mold resistance in a single material. AAC can be up to five times lighter than concrete. AAC also exhibits excellent thermal efficiency.

As disclosed in Kirk-Othmer Encyclopedia of Chemical Technology, Chapter "Lime and Limestone", page 26 (DOI 10.1002 / 0471238961. 12091305072I2019.a01.pub2, published on May 17, 2002), AAC can typically be prepared by mixing quicklime with an active form of silicon (eg. ground silica sand or pulverized fuel ash which comprises reactive silicon dioxide), sand, water, aluminum powder and, depending on the quicklime quality, cement. The reaction of quicklime with the aluminum powder generates hydrogen bubbles which cause the "cake" to rise. At the same time, the quicklime reacts with water, generating heat and causing the cake to set. The cake is then removed from the mold and cut into blocks before autoclaving at elevated temperature and pressure.

It is also known, for instance from patent GB 648,280 to produce AAC by mixing Portland cement, pulverized fuel ash, sand, and water and inducing the aeration by the action of an alkali such as caustic soda on a finely divided metal powder such as aluminum powder.

However, such methods lead to the production of hydrogen gas and both the fine aluminum powder and the hydrogen gas are explosive and hazardous substances, which require special safety equipment.

It is also known to use other aerating agents, such as hydrogen peroxide. The use of hydrogen peroxide does not have any environmental impact since the gas formed is oxygen. For instance, GB 1028243, published in 1966, discloses a process for the production of porous hydraulic materials such as porous concrete, wherein the porosity is at least in part due to the liberation of oxygen produced by decomposing hydrogen peroxide.

Unfortunately, in the field of aerated concretes and especially of AAC, we have now surprisingly found that just replacing the well known aluminum powder process by a source of oxygen such as hydrogen peroxide does not allow the manufacture of aerated concrete with the same expansion coefficients for a same formulation.

It is thus an object of the present invention to provide a process for the manufacture of aerated concrete and especially of AAC having improved expansion coefficients compared to the sole use of hydrogen peroxide. It is also an object of the present invention to provide a process for the manufacture of aerated concrete and especially of AAC which is safe and environmental friendly compared to the classical technology based on the generation of hydrogen gas from aluminum powder. The process of the invention being safer, the equipment can also be simplified and it is also advantageous in terms of process control. The process of the present invention is also advantageous in terms of energy savings.

To this end, the present invention is related to a process for the manufacture of aerated concrete construction materials comprising the following steps:
a. preparing a composition comprising at least water, a cementitious material, calcium oxide, a compound comprising reactive silicon dioxide, a source of oxygen, and a compound selected from sodium carbonate (Na₂CO₃), sodium bicarbonate (NaHCO₃) and sodium hydroxide (NaOH),
b. pouring the mixture of step (a) into a mould and allowing the mixture to set, thus forming a stiffened body,
c. removing the stiffened body from the mould,
d. optionally cutting and shaping the stiffened body, and
e. curing the stiffened body.

The expression "aerated concrete" denotes a material expanded further to the presence of small bubbles into the concrete mixture during its setting, which will confer porosity to the final cured material. Due the presence of these bubbles, this kind of material is "enlightened" or "lightweight" or "air-entrained" or "porous" compared to classic concrete materials, i.e. the resulting aerated concrete material has a lower density compared to a classic concrete material. For example, aerated concrete having a density of from 0.2 to 1.2 kg/dm³, especially from 0.3 to 0.8 kg/dm³, for instance around 0.5, 0.6 or 0.7 kg/dm³ can be obtained according to the process of the present invention. The density was determined as follows: the dry weight of a rectangular block (kg) was divided by its volume (dm³). This kind of materials exhibits a high porous volume, which is generally at least 15 %, especially at least 20 % and in the most advantageous cases at least 55 %. The porous volume is measured according to the following method:
- Measuring the weight of a dry material, such as a brick, obtained by heating during 24 h at 100°C and cooling afterwards,
- Filling all the porous volume with water by immersing during 24h in water, and
- Measuring the weight of the wet material, such as a brick.

The precast construction materials made by the process of the invention are typically bricks, lintels, slabs, beams, ceiling tiles, blocks, including for example inner leaf blocks, party wall blocks, partitioning blocks, foundation blocks, floor blocks, panelized bricks, most commonly bricks and blocks.

The cementitious material used as one of the raw materials in the process of the invention can be chosen from hydraulic binders, pozzolanic materials and mixtures thereof.

Hydraulic binders are finely ground inorganic materials which, when mixed with water, form a paste which sets and hardens by means of hydration reactions and processes and which, after hardening, retains its strength and stability even under water. Typical examples of hydraulic binders are Portland cement; calcium aluminate cements such as monocalcium aluminate (CaAl₂O₄) usually formed from the mixture of limestone and bauxite, and Mayenite (Ca₁₂Al₁₄O₃₃); calcium sulfoaluminate cements such as ye'elimite (Ca₄(AlO₂)₆SO₄); pulverized fly (fuel) ash of type C (PFA-C) also known as calcareous fly ash; hydraulic lime; and mixtures thereof

Pozzolanic materials, also known as "cement extenders", do not harden in themselves when mixed with water but, when finely ground and in the presence of water, they react at normal ambient temperature with dissolved calcium hydroxide to form strength-developing calcium silicate and calcium aluminate compounds which are similar to those which are formed in the hardening of hydraulic binders. When combined with calcium hydroxide, pozzolanic materials thus exhibit cementitious (hydraulic binding) properties. The calcium hydroxide is usually formed by mixing lime or calcium oxide (CaO) with water. Examples of suitable pozzolanic materials are fly ash (or fuel ash), especially pulverized fly ash of type F (PFA-F) also known as siliceous fly ash, ground granulated blast furnace slag, silica fume, high-reactivity metakaolin, crushed fired clay brick wastes, natural pozzolans including diatomaceous earth, metakaolin, ground lapilli, rice husk (or hulls) ash, volcanic ash, pumicite, calcined clay or calcined shale and mixtures thereof

Examples of cementitious materials comprising both a hydraulic binder and a pozzolanic material are Portland blastfurnace cement (i.e a mixture of Portland cement and ground granulated blast furnace slag), Portland flyash cement (i.e a mixture of Portland cement and fly ash), Portland pozzolan cement (i.e a mixture of Portland cement and fly ash and/or other natural or artificial pozzolans) and Portland silica fume cement (i.e a mixture of Portland cement and silica fume).

Examples of cementitious materials comprising a pozzolanic material but no hydraulic binder as defined above are pozzolan-lime cements (i.e a mixture of ground natural or artificial pozzolans and lime), slag-lime cements (i.e a mixture of ground granulated blast furnace slag and lime) and supersulfated cements (i.e a mixture of ground granulated blast furnace slag, gypsum and lime).

In the following, the expression "Dry Material (DM)" (or Dry Mix) will be used to designate the mixture composed of the following compounds, provided that they are used in the composition of step (a), selected from the cementitious materials (including the hydraulic binders and the pozzolanic materials), the compound comprising reactive silicon dioxide, limestone, calcium carbonate, lime or quicklime (CaO), gypsum (CaSO₄.2H₂O) (and/or calcium sulphate hemihydrate (CaSO₄. ½ H₂O) and/or anhydrite (CaSO₄)), and aggregates. As a first example, if, amongst this list, only a cementitious material and a compound comprising reactive silicon dioxide are used in the composition of step (a), the expression "Dry Material" will designate the mixture comprising the cementitious material and the compound comprising reactive silicon dioxide. As a second example, if all the compounds of this list are used in the composition of step (a), the expression "Dry Material" will designate the mixture comprising the cementitious material, the compound comprising reactive silicon dioxide, the limestone, the calcium carbonate, the lime or quicklime, the gypsum (and/or calcium sulphate hemihydrate (CaSO₄. ½ H₂O) and/or anhydrite), and the aggregates.

The cementitious material is in general present in the composition of step (a) in an amount from 5 to 99 % by weight of the Dry Material, preferably in an amount from 10 to 80 %.

In the present invention, the calcium oxide (or lime) is usually added in the composition of step (a) in an amount from 1 to 50 % by weight of the Dry Material, especially from 2 to 35 %, for instance from 3 to 15%.

In the process of the present invention, the expression "compound comprising reactive silicon dioxide" means that the compound comprises at least a fraction of silicon dioxide which is soluble after treatment with hydrochloric acid and with boiling potassium hydroxide solution, as defined in British Standard BS EN 197-1:2000. In the present invention, the compound comprising reactive silicon dioxide can for example be selected from sodium silicates, for example sodium silicates having a ratio Na₂O/SiO₂ from 1 to 3, for instance from sodium metasilicate (Na₂SiO₃) also called water glass or soluble glass, sodium orthosilicate (Na₄SiO₄), sodium pyrosilicate (Na₆Si₂O₇) and mixtures thereof; aluminum silicate (Al₂SiO₅), including minerals composed of aluminum silicate such as andalusite, silimanite (or bucholzite) and kyanite; calcium silicates, such as CaSiO₃ or CaO.SiO₂ (also known as wollastonite), Ca₂SiO₄ or 2CaO.SiO₂ (also known as calcium orthosilicate), Ca₃SiO₅ or 3CaO.SiO₂ (also known as alite), Ca₃Si₂O₇ or 3CaO.2SiO₂ (also known as rankinite); precipitated silica; silica fume; silicate type sand, preferably ground silicate type sand or pure quartz sand, especially ground silica sand; diatomaceous earth; fly (fuel) ash, especially pulverized fly ash, in particular pulverized fly ash of type F (PFA-F) also known as siliceous fly ash; ground granulated blast furnace slag and mixtures thereof In the present invention, depending on its nature, the compound comprising reactive silicon dioxide may comprise reactive silicon dioxide in various amounts. For instance, pure quartz sand can comprise from about 80 to about 100% by weight of reactive silicon dioxide. Another example is pulverized fly ash of type F which comprises a high amount of reactive silicon dioxide. For example, depending on its composition, pulverized fly ash of type F can comprise from 40 to 55% by weight of reactive silicon dioxide, or even more than 55% by weight. Preferably, the compound comprising silicon dioxide comprises it in an amount of at least 35% by weight, preferably of at least 40% by weight, more preferably of at least 45% by weight, for instance of at least 50 or 55% by weight. The compound comprising reactive silicon dioxide may comprise an amount of reactive silicon dioxide as high as 100% by weight, especially as high as 90% by weight, for example as high as 80% by weight.

The amount of compound comprising reactive silicon dioxide in composition (a) will depend on its nature (including its proportion ofreactive silicon dioxide) and on the nature and proportions of the other compounds. Depending on its nature and on the nature and proportions of the other compounds present in composition (a), said compound can for example be added in the composition of step (a) in an amount of at least 35 % by weight of the Dry Material, preferably of at least 40% by weight, more preferably of at least 45% by weight, for example of at least 50% by weight. The compound comprising reactive silicon dioxide is typically present in the composition of step (a) in an amount of at most 95% by weight, in particular of at most 90% by weight, for instance in an amount of at most 80 % by weight.

The source of oxygen used in the process of the invention can be selected, among others, from hydrogen peroxide, sodium percarbonate, sodium perborate, calcium peroxide, magnesium peroxide, zinc peroxide, mixed calcium/magnesium peroxide and their mixtures, preferably hydrogen peroxide. These products, when introduced into the process, result in the formation of oxygen gas that forms bubbles and creates porosity into the material. In the process of the invention, the oxygen source is usually present in the composition of step (a) in an amount X from 0.01 to 10 % of corresponding hydrogen peroxide by weight of the Dry Material used in the composition of step (a), in particular from 0.05 to 4 %. The source of oxygen can be added in the composition of step (a) as a solid or as a solution or as a suspension, preferably as a solution or suspension, especially as an aqueous solution or suspension. If the oxygen source compound is hydrogen peroxide, it is typically added as an aqueous solution, which usually contains from 1 to 70 % wt/wt of hydrogen peroxide, preferably from 2 to 50 % wt/wt, especially from 3 to 30 % wt/wt for example around 5, 10, 15 or 20 % wt/wt.

Into the process of the invention, the at least one compound selected from sodium carbonate, sodium bicarbonate and sodium hydroxide is generally present into the composition of step (a) in a total amount Y from 0.1 to 10 % by weight of the Dry Material used in the composition of step (a), preferably from 1 to 7%.

In the present invention, the sodium carbonate can be added in the form of anhydrous sodium carbonate (Na₂CO₃), hydrated sodium carbonate such as sodium carbonate monohydrate (Na₂CO₃.H₂O), sodium carbonate heptahydrate (Na₂CO₃.7H₂O), sodium carbonate decahydrate (Na₂CO₃.10H₂O), and mixtures thereof The sodium bicarbonate (NaHCO₃) can be added in the form of synthetic sodium bicarbonate, natural salts such as nahcolite, and mixtures thereof Sodium carbonate and sodium bicarbonate can also be added in the form of mixed salts such as sodium sesquicarbonate (Na₂CO₃.NaHCO₃.2H₂O), trona (Na₂CO₃,NaHCO₃.2H₂O), wegscheiderite (Na₂CO₃.3NaHCO₃), and mixtures thereof Into the process of the invention, the at least one compound selected from sodium carbonate, sodium bicarbonate and sodium hydroxide can be added in the composition of step (a) as a solid or as a solution or as a suspension, preferably as a solution or as a suspension, especially as an aqueous solution or suspension. Ifsaid compound is added as a solution or suspension, the solution or suspension typically has a concentration from 1 to 70 % wt/wt, preferably from 2 to 50 % wt/wt, especially from 5 to 30 % wt/wt for example around 10, 15 or 20 % wt/wt.

The water present into the composition of step (a) is usually present in an amount such that the ratio water on Dry Material (W/DM) is at least 0.1, preferably at least 0.2, more preferably at least 0.3, for example at least 0.4. This ratio water on dry mix is usually at most 1, in particular at most 0.8, especially at most 0.6, for example at most 0.5.

The composition of step (a) may further comprise at least one aggregate, preferably a fine aggregate. Said aggregate may be selected for example from sand, including ground silica sand, quartz sand, lapilli, fine ground dry or fired clay, crushed aerated autoclaved concrete, and mixtures thereof. Aggregates are often added in an amount of 0 up to 90 % by weight of the Dry Material, for instance from 10 to 80%. If an aggregate is added which does neither act as a pozzolanic material nor as a compound comprising reactive silicon dioxide, it will usually be added in an amount from 0 to 50% by weight of the Dry Material, for example from 0 to 30%.

The composition of step (a) may further comprise limestone, calcium carbonate, gypsum (CaSO₄.2H₂O), calcium sulphate hemihydrate (CaSO₄. ½ H₂O), anhydrite (CaSO₄) and mixtures thereof Anhydrite (or gypsum or calcium sulphate hemihydrate) is recognized to help to regulate setting as in the hydration process it releases heat and hardens quite quickly. Anhydrite (or gypsum or calcium sulphate hemihydrate) is typically added in an amount from 0 to 10% by weight of the Dry Material.

The composition of step (a) may further comprise at least one catalyst used to activate or accelerate the release of the oxygen gas by the oxygen source compound. The catalyst may be selected from metals and metal derivatives, preferably from transition metals and transition metal derivatives, more preferably from oxides and salts of transition metals, especially from Mn, Fe, Cu, Co, Pd and derivatives thereof, for example from MnO₂, MnSO₄, CuO FeSO₄, FeO, Fe₂O₃, FeCl₃ or KMnO₄ which will release MnO₂ in alkaline media. Most preferred are catalysts based on manganese, especially MnO₂ and KMnO₄. The catalyst is typically added to the composition of step (a) in an amount from 1 to 1000 ppm by weight of Dry Material, especially from 10 to 500 ppm, for instance in an amount about 50 to 200 ppm. If a compound naturally containing such metals, metal oxides and/or metal salts in a sufficient amount is added in composition of step (a), this compound will also act as a catalyst. For example pulverized fly ash oftype F (PFA-F) and granulated blast furnace slag (GBFS) naturally comprise transition metal salts and transition metal oxides such as Fe₂O₃. Thus, PFA-F and GBFS will act as natural catalysts. The catalyst may also be selected from enzymes, for example catalase.

The composition of step (a) may also further comprise at least one hypochlorite, preferably at least one hypochlorite selected from calcium hypochlorite (Ca(ClO)₂), sodium hypochlorite (NaOCl) and mixtures thereof The hypochlorite could indeed activate the oxygen release through a redox reaction with the oxygen source compound In the present invention, if a hypochlorite is used, it is typically added in a stoechiometric amount regarding the oxygen source compound, especially in a stoechiometric amount regarding the corresponding hydrogen peroxide.

The composition of step (a) may also further comprise various other additives, amongst which surfactants, sodium silicates, cellulosic derivatives such as carboxymethylcellulose, natural or synthetic protein derivatives, and/or starch and starch derivatives such as modified starches. The sodium silicate is usually added as a viscosity modifier and/or as a setting accelerator and can be selected from any sodium silicate compound, especially from sodium silicate compounds having a ratio Na₂O/SiO₂ from 1 to 3, preferably from 1.2 to 2, more preferably from 1.6 to 1.8, for example from sodium metasilicate (Na₂SiO₃) also called water glass or soluble glass, sodium orthosilicate (Na₄SiO₄), sodium pyrosilicate (Na₆Si₂O₇) and mixtures thereof. The natural or synthetic protein derivatives are usually used to create porous cellular structures. The starch and starch derivatives are usually added to control the rheology of the mixture before setting.

In the process of the present invention, one compound can have two or more functions. For example, pulverized fly ash of type F (PFA-F) and ground granulated blast furnace slag can be used as a cementitious material (pozzolanic material) and as a compound comprising reactive silicon dioxide, while also providing metals and metal derivatives, especially metal salts and metal oxides, which will act as catalyst towards the release of the oxygen gas by the oxygen source. Another example is silica fume which is a known pozzolanic material as well as a source of silicon dioxide. Still another example is fine ground silica sand or quartz sand which can be used as both a compound comprising reactive silicon dioxide and a fine aggregate.

In a first preferred embodiment of the process of the invention, the composition of step (a) is prepared according to the following steps:
i. mixing, optionally in the presence of part of the water, the at least one cementitious material with the at least one compound comprising reactive silicon dioxide and with the other components optionally used in the Dry Material,
ii. adding the at least one compound selected from sodium carbonate, sodium bicarbonate and sodium hydroxide, optionally pre-mixed with part of the water, to the mixture of step (i) and homogenizing the mixture, preferably by mixing during from 1 to 600 seconds, more preferably from 5 to 300 seconds, and
iii. adding the source of oxygen, optionally pre-mixed with part of the water, and the remaining part of the water, to the mixture of step (ii), and homogenizing the mixture, preferably by mixing during a period from 1 second to 120 seconds, more preferably from 5 up to 60 seconds.

In a second preferred embodiment of the present invention, the composition of step (a) is prepared according to the following steps:
i. mixing the at least one compound comprising reactive silicon dioxide with part of the water to make a slurry,
ii. adding the at least one cementitious material and the other components optionally used in the Dry Material to the slurry of step (i), especially sequentially, and homogenizing the mixture, preferably by mixing during from 1 to 300 seconds, more preferably from 5 to 180 seconds,
iii. adding the at least one compound selected from sodium carbonate, sodium bicarbonate and sodium hydroxide, optionally pre-mixed with an additional part of the water, to the mixture of step (i) and homogenizing the mixture, preferably by mixing during from 1 to 180 seconds, more preferably from 5 to 120 seconds, and
iv. adding the source of oxygen, optionally pre-mixed with part of the water, and the remaining part of the water to the mixture of step (iii), and homogenizing the mixture, preferably by mixing during from 1 to 120 seconds, more preferably from 5 up to 60 seconds.

In this second preferred embodiment, in the first step (i), the compound comprising reactive silicon dioxide is mixed with a first part of the water to form a slurry. Said slurry may for example have a content of dry matter of from 50 to 90% by weight, for instance around 70% by weight. In an especially preferred embodiment, this slurry is preheated to a temperature of from 20 to 70°C, preferably from 25 to 60°C, for instance about 30 to 50°C before the addition of the other components.

According to these two preferred embodiments, any kind of mixer can be used, mixers of the kneader type or mixing screw type giving especially good results.

In a third preferred embodiment of the present process, the composition of step (a) is prepared according to the following steps:
i. mixing the cementitious material, the compound comprising reactive silicon dioxide and the other components optionally used in the Dry Material in a dry type mixer for a period sufficient to achieve homogeneity, usually from 1 to 600 seconds
ii. adding the at least one compound selected from sodium carbonate, sodium bicarbonate and sodium hydroxide, optionally pre-mixed with part of the water, to the mixture of step (i) and homogenizing the mixture, preferably by mixing during from 1 to 120 seconds, and
iii. adding the source of oxygen, optionally pre-mixed with part of the water, and the remaining part of the water to the mixture of step (ii), and homogenizing the mixture, preferably by mixing during from 1 second to 120 seconds, more preferably from 5 up to 60 seconds.

In the process of the present invention, including these three preferred embodiments, if a catalyst is to be added, it is advantageously added after the addition of the at least one compound selected from sodium carbonate, sodium bicarbonate and sodium hydroxide, and before the addition of the source of oxygen. After addition of the catalyst, the mixture is usually homogenized, preferably by mixing during from 5 to 120 seconds, preferably from 10 to 60 seconds.

According to this invention, including these three preferred embodiments, if any additional compound such as a hypochlorite, a surfactant, a sodium silicate, a cellulosic derivative, a protein derivative and/or a starch or starch derivative, has to be added to the composition of step (a), they are typically added at the same time, before, or after the compound selected from sodium carbonate, sodium bicarbonate and sodium hydroxide, and preferably before the oxygen source.

In a fourth embodiment of the present invention, which can also be combined with the three previous preferred embodiments described above, the water added at the various points of the process, including the water used to prepare intermediate slurries and/or solutions, has a temperature from 20 to 90°C as the starting temperature, preferably from 25 to 60°C, for example around from 30 to 50°C.

In the process of the present invention, in step (b), after pouring the mixture of step (a) into a mould, the mixture is allowed to form a stiffened body, usually at atmospheric pressure and especially during from 1 minute to 24 hours, preferably from 5 minutes to 12 hours, more preferably from 15 minutes to 6 hours, for instance from 20 minutes to 4 hours. The stiffened body is typically formed at a temperature from 10 to 90 °C. Said temperature can be obtained by only the increased temperature generated by the exothermic chemical reactions, after pouring the mixture of step (a) into a mould at ambient temperature. Said stiffening can also be conducted at a temperature from 30 to 90 °C, especially from 30 to 80°C, after pouring the mixture of step (a) into a mould heated at temperature from 30 to 90°C.

In the present process, after step (c), i.e. removal of the stiffened body of step (b) from its mould, the stiffened body can optionally be cut at a defined size and/or a defined shape in a step (d), for instance in the shape of smaller blocks or bricks, or preferred shape according to production needs, for example using a wire-cutter or any other type of cutters.

In the present process, the curing in step (e) can be conducted at ambient conditions, in a climatic room, in a classical oven or in an autoclave, preferably in an autoclave. If the curing is conducted in a climatic room (generically a drying room), it is usually conducted at atmospheric pressure and at a temperature from room temperature up to 80°C, especially under specific humidity conditions and following specific heat profile. If the curing is conducted in an oven, it is typically conducted at atmospheric pressure and at a temperature up to 120°C, optionally in the presence of a source of steam. If the curing is conducted in an autoclave, the conditions of pressure, temperature, duration and relative humidity will depend on the available equipment, the pressure, humidity and temperature being defined by the saturated water-vapor diagram. For instance, for a specific autoclave, the curing of step (d) could be conducted during from 1 to 24 hours, preferably from 6 to 18 hours, for instance about 10 to 12 hours, at a temperature from 150 to 250°C, particularly from 175 to 225°C, especially from 190 to 200°C and at a pressure from 5 to 20 bars, particularly from 8 to 15 bars. In an especially preferred embodiment, the rate of temperature increase is controlled according to equipment manufacture instruction.

The present invention also relates to aerated concrete construction materials and especially to aerated autoclaved concrete construction materials obtainable by the process described above.

In view of the above, the present invention also relates to the use of an oxygen source as described above and of at least one compound selected from sodium carbonate, sodium bicarbonate and sodium hydroxide for the manufacture of aerated concrete construction materials, especially for the manufacture of aerated autoclaved concrete construction materials, in particular for the manufacture of aerated concrete construction materials obtainable by the process described above.

The present invention is further illustrated below without limiting the scope thereto.

### Examples

In the following examples, the containers used to cast the concrete have a volume of about 1000 ml and are made of plastic such as polyvinylchloride (PVC), polyethylene (PE), polypropylene (PP) or expanded polystyrene(EPS). In the following examples, the mixer used was a mixer RW 25 IKA Stirring Motor 140W equipped with an axial flow impeller (Stainless steel, 68 mm overall diameter, 10 mm bore diameter), used at 1600 rpm.

The amounts of ingredients used in the various compositions described below are expressed in % by weight of the Dry Material (composed of the cement, lime, gypsum, sand and/or fly ash). The amount of water is expressed as the weight ratio Water / Dry Material (W/DM).

### Example 1: silica sand and Al powder

Aerated concrete blocks based on the mix design summarized in Table 1 were produced according to the procedure below.

**Table 1**

| Composition (%) | Ex. 1 |
|---|---|
| Portland cement | 14.2 |
| Lime | 14.2 |
| Gypsum | 2.6 |
| Pure Silica Sand | 69.0 |
| Al powder | 0.083 |
| Water / Dry Material ratio | 0.62 |

All the solid components (i.e. Portland cement, lime, gypsum, silica sand and Al powder) were mixed together. Water pre-heated at a temperature of 60°C was added and everything was mixed during 30 seconds. The mixture was then poured into a plastic container and allowed to stiffen at room temperature during roughly 1 day. The stiffened body was then dried in an oven at 85°C till dryness (24-48 hrs).

The density of the resulting blocks was 0.55 g/ml.

### Examples 2-6: silica sand and hydrogen peroxide

Aerated concrete blocks based on the mix design summarized in Table 2 were produced according to the procedure below.

**Table 2**

| Composition (%) | Ex. 2-6 |
|---|---|
| Portland cement | 14.2 |
| Lime | 14.2 |
| Gypsum | 2.6 |
| Pure Silica Sand | 69.0 |
| H₂O₂ | 0.62 |
| Na₂CO₃ | 5 |
| Mn²⁺ (ppm) | 100 |
| Water / Dry Material ratio | 0.62 |

5 samples of Portland cement, lime, gypsum and silica sand mixed together were prepared. The sodium carbonate was dissolved in part of the water (concentration about 20 wt%) pre-heated at various temperatures (see Table 3), the resulting solutions were added to the solid mix samples and the mixtures were mixed during about 30 seconds. The catalyst was added as a 10g/l manganese sulfate aqueous solution and the mixtures were mixed during about 15 seconds. The hydrogen peroxide was added in the form of an aqueous solution having a concentration of about 6 wt% (starting from a 17 wt% hydrogen peroxide aqueous solution diluted with part of the water), and then the remaining part of the water was added. The resulting mixtures were further mixed during 20 seconds. The mixtures were poured into plastic containers and allowed to stiffen at room temperature during roughlyl day. The stiffened bodies were then dried in an oven at 85°C till dryness (24-48 hrs).

The temperature of the molded bodies during the stiffening step was monitored and the results after 15 minutes of stiffening are shown in Table 3.

The densities of the resulting blocks are summarized in Table 3.

**Table 3**

| | Ex. 2 | Ex.3 | Ex. 4 | Ex.5 | Ex. 6 |
|---|---|---|---|---|---|
| Water temperature (°C) | 15 | 20 | 25 | 30 | 40 |
| Molded bodies temperature (15min) (°C) | 24 | 35 | 48 | 58 | Not measured |
| Density (g/ml) | 0.68 | 0.61 | 0.48 | 0.50 | 0.76 |

These results show that the biggest expansion is obtained when the water is added at a temperature from 20 to 30°C and especially from 25 to 30°C.

### Examples 7-12: silica sand and hydrogen peroxide

Aerated concrete blocks based on the mix designs summarized in Table 4 were produced according to the procedure below.

**Table 4**

| Composition (%) | Ex. 7 | Ex. 8 | Ex. 9 | Ex. 10 | Ex. 11 | Ex. 12 |
|---|---|---|---|---|---|---|
| Portland cement | 14.2 | 14.2 | 14.2 | 14.2 | 14.2 | 14.2 |
| Lime | 14.2 | 14.2 | 14.2 | 14.2 | 14.2 | 14.2 |
| Gypsum | 2.6 | 2.6 | 2.6 | 0 | 0 | 0 |
| Pure Silica sand | 69.0 | 69.0 | 69.0 | 69.0 | 69.0 | 69.0 |
| H₂O₂ | 0.31 | 0.31 | 0.31 | 0.31 | 0.31 | 0.31 |
| Na₂CO₃ | 4 | 5 | 6 | 4 | 5 | 6 |
| Mn²⁺ (ppm) | 100 | 100 | 100 | 100 | 100 | 100 |
| Water / Dry Material ratio | 0.62 | 0.62 | 0.62 | 0.62 | 0.62 | 0.62 |

Portland cement, lime, silica sand and gypsum (if present) were mixed together. The sodium carbonate was dissolved in part of the water (concentration about 20 wt%) pre-heated at a temperature about 26-27°C, the resulting solution was added to the solid mix and everything was mixed during 30 seconds. The catalyst was added as a 10g/l manganese sulfate aqueous solution and the mixture was mixed during 15 seconds. The hydrogen peroxide was added in the form of an aqueous solution having a concentration of about 6 wt% (starting from a 17 wt% hydrogen peroxide aqueous solution diluted with part of the water), and then the remaining part of the water was added. The resulting mixture was mixed during 20 seconds. The mixtures were then poured into plastic containers and allowed to stiffen at room temperature during roughlyl day. The stiffened bodies were then dried in an oven at 85°C till dryness (24-48 hrs).

The densities of the resulting blocks are summarized in Table 5.

**Table 5**

| | Ex. 7 | Ex. 8 | Ex. 9 | Ex.10 | Ex.11 | Ex.12 |
|---|---|---|---|---|---|---|
| Density (g/ml) | 0.90 | 0.63 | 0.65 | 0.85 | 0.60 | 0.61 |

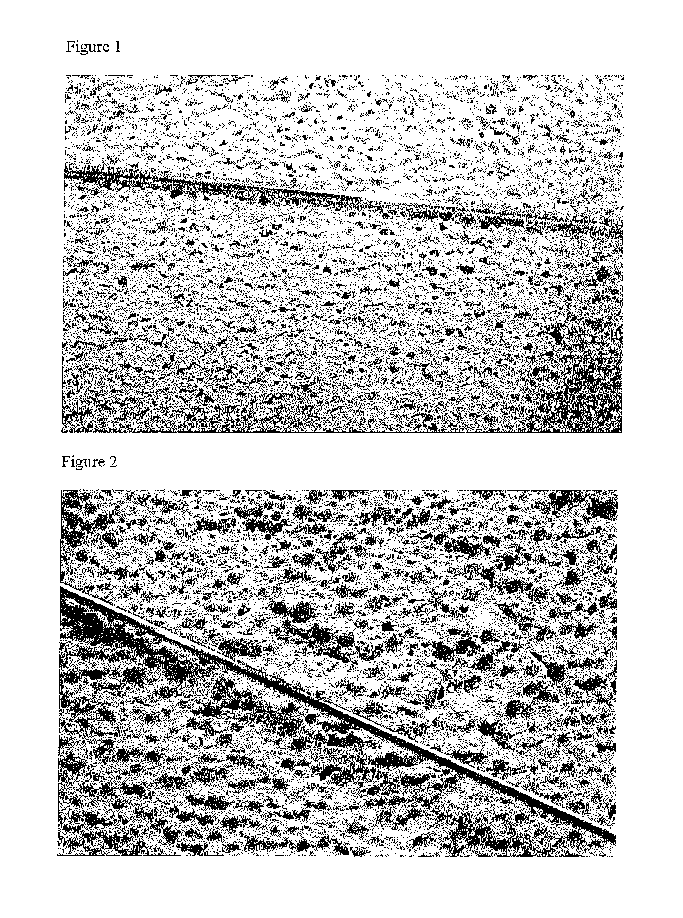

These results show that, in these mix designs, the optimal amount of Na₂CO₃ is 5% by weight of the Dry Material, leading to the lowest densities independently of the presence of gypsum. The expansion is slightly less when gypsum is present but it can be seen from pictures of the cured bodies of examples 9 (Figure 1) and 11 (Figure 2) that the bubbles were smaller when gypsum was present.

### Example 13: pulverized fly ash and Al powder

Aerated concrete blocks based on the mix design summarized in Table 6 were produced according to the procedure below.

**Table 6**

| Composition (%) | Ex. 13 |
|---|---|
| Portland cement | 14.3 |
| Lime | 3.4 |
| Gypsum | 0.68 |
| Pulverized fly ash of type F (PFA-F) | 81.6 |
| Al powder | 0.073 |
| Water / Dry Material ratio | 0.43 |

PFA was mixed with about 80-90% of the water to be added to the mixture for about 30-40 seconds to form a suspension. Portland cement, lime and gypsum were sequentially added to the PFA suspension, with a further mixing during about 15-30 seconds after each addition. Al powder was added with the remaining part of the water and the mixture was further mixed during about 20 seconds. The mixture was then poured into a plastic container and allowed to stiffen at room temperature until maximal expansion was achieved (around 30-60 minutes). The stiffened body was then dried in an oven at 85°C till dryness (24-48h).

The density of the resulting block was 0.78 g/ml.

### Examples 14-17: pulverized fly ash and hydrogen peroxide

Aerated concrete blocks based on the mix designs summarized in Table 7 were produced according to the procedure below.

**Table 7**

| Composition (%) | Ex. 14 | Ex. 15 | Ex. 16 | Ex. 17 |
|---|---|---|---|---|
| Portland cement | 14.3 | 14.3 | 14.3 | 14.3 |
| Lime | 3.4 | 3.4 | 3.4 | 3.4 |
| Gypsum | 0.68 | 0.68 | 0.68 | 0.68 |
| Pulverized fly ash of type F (PFA-F) | 81.6 | 81.6 | 81.6 | 81.6 |
| H₂O₂ | 0.44 | 0.44 | 0.44 | 0.44 |
| Na₂CO₃ | 4 | 5 | 6 | 7 |
| Water / Dry Material ratio | 0.43 | 0.43 | 0.43 | 0.43 |

PFA was mixed with about 80-90% of the water to be added to the mixture for about 30-40 seconds to form a suspension. Portland cement, lime and gypsum were sequentially added to the PFA suspension, with a further mixing during about 15-30 seconds after each addition. The sodium carbonate was dissolved in part of the water (concentration about 20 wt%) pre-heated at a temperature about 26-27°C, the resulting solution was added to the PFA / cement mixture and everything was mixed during 15-30 seconds. The hydrogen peroxide was added in the form of an aqueous solution having a concentration of about 6 wt% (starting from a 17% hydrogen peroxide aqueous solution diluted with part of the water) and then the remaining part of the water was added. The resulting mixture was mixed during about 15-20 seconds. The mixtures were poured into plastic containers and allowed to stiffen at room temperature during roughly1 day. The stiffened bodies were then dried in an oven at 85°C till dryness (24-48 hrs).

The densities of the resulting blocks are summarized in Table 8.

**Table 8**

| | Ex. 14 | Ex. 15 | Ex. 16 | Ex. 17 |
|---|---|---|---|---|
| Density (g/ml) | 0.85 | 0.66 | 0.53 | 0.70 |

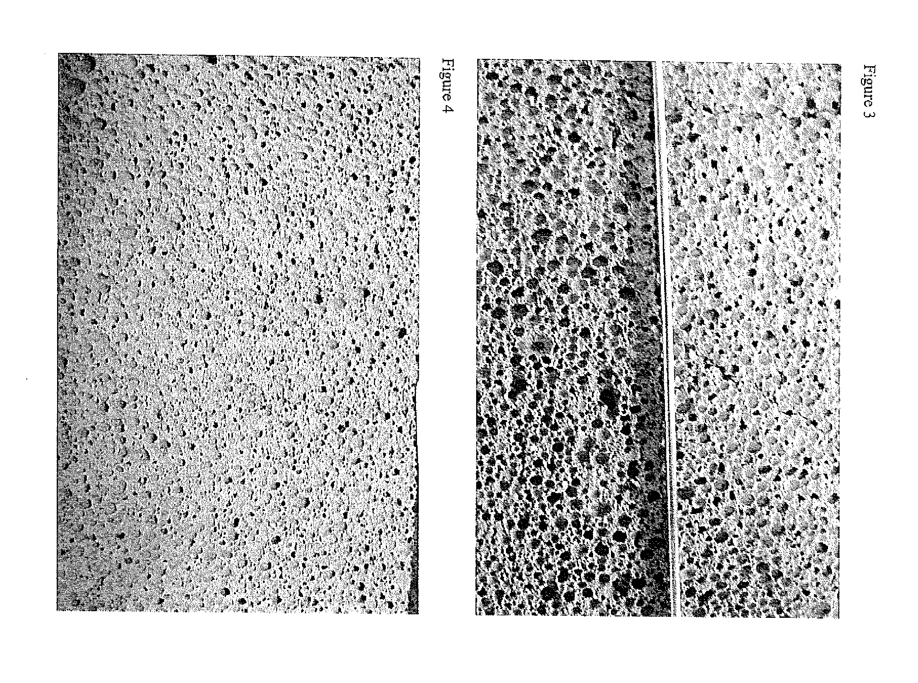

These results show that, in these mix designs, the optimal amount of Na₂CO₃ is 6% by weight of the total Dry Material (example 16, Figure 3).

### Example 18: pulverized fly ash and hydrogen peroxide

Aerated concrete blocks based on the mix design summarized in Table 9 were produced according to the same procedure as in examples 14-17.

**Table 9**

| Composition (%) | Ex. 18 |
|---|---|
| Portland cement | 14.3 |
| Lime | 3.4 |
| Gypsum | 0.68 |
| Pulverized fly ash of type F (PFA -F) | 81.6 |
| H₂O₂ | 0.8 |
| Na₂CO₃ | 6 |
| Water / Dry Material ratio | 0.43 |

The density of the resulting blocks was 0.72 g/ml. There thus seems to exist a relationship between the optimal Na₂CO₃ and H₂O₂ amounts.

### Examples 19-23: pulverized fly ash and hydrogen peroxide

Examples 14-16 (respectively 4, 5 and 6% by weight of Na₂CO₃) were reproduced with other batches of cement and lime. Amounts oaf 3% of Na₂CO₃ were also tested. Aerated concrete blocks based on the mix designs summarized in Table 10 were produced according to the procedure of examples 14-17, except that the water was preheated to a temperature from 23 to 25°C rather than 26-27°C.

**Table 7**

| Composition (%) | Ex. 19 | Ex. 20 | Ex. 21 | Ex.22 | Ex. 23 |
|---|---|---|---|---|---|
| Portland cement (other batch than in Ex. 14-17) | 14.3 | 14.3 | 14.3 | 14.3 | 14.3 |
| Lime (other batch than in Ex. 14-17) | 3.4 | 3.4 | 3.4 | 3.4 | 3.4 |
| Gypsum | 0.68 | 0.68 | 0.68 | 0.68 | 0.68 |
| Pulverized fly ash of type F (PFA-F) | 81.6 | 81.6 | 81.6 | 81.6 | 81.6 |
| H₂O₂ | 0.44 | 0.44 | 0.44 | 0.44 | 0.44 |
| Na₂CO₃ | 6 | 5 | 4 | 3 | 3 |
| Water / Dry Material ratio | 0.43 | 0.43 | 0.43 | 0.43 | 0.43 |

The densities of the resulting blocks are summarized in Table 11.

**Table 11**

| | Ex. 19 | Ex. 20 | Ex. 21 | Ex. 22 | Ex. 23 |
|---|---|---|---|---|---|
| Density (g/ml) | n.m. | n.m. | 0.58 | 0.53 | 0.57 |

The densities of examples 19 and 20 were not measured (n.m) as the concrete mix was too viscous and did not expand. These results show that, in these mix designs, the optimal amount of Na₂CO₃ is 3% by weight of the total Dry Material (example 22, Figure 4; example 23). This shows that the optimal amount of Na₂CO₃ depends on the quality of the raw materials, especially on the quality of the cementitious materials.

### Examples 24-28: pulverized fly ash, silica sand and hydrogen peroxide

Aerated concrete blocks based on the mix designs summarized in Table 12 were produced according to the procedure of examples 14-17, the silica sand being added to the PFA suspension sequentially with the addition of Portland cement, lime and gypsum, and the water being pre-heated at temperatures from 24.5 to 26°C.

**Table 12**

| Composition (%) | Ex. 24 | Ex. 25 | Ex. 26 | Ex. 27 | Ex. 28 |
|---|---|---|---|---|---|
| Portland cement | 14.3 | 14.3 | 14.3 | 14.3 | 14.3 |
| Lime | 3.4 | 3.4 | 3.4 | 3.4 | 3.4 |
| Gypsum | 0.68 | 0.68 | 0.68 | 0.68 | 0.68 |
| Pure silica sand | 70 | 69 | 71 | 71 | 71 |
| Pulverized fly ash of type F (PFA-F) | 10 | 10 | 10 | 10 | 10 |
| H₂O₂ | 0.44 | 0.44 | 0.44 | 0.44 | 0.44 |
| Na₂CO₃ | 5 | 4 | 3 | 3 | 3 |
| Water / Dry Material ratio | 0.6 | 0.6 | 0.5 | 0.4 | 0.43 |

The densities of the resulting blocks are summarized in Table 13.

**Table 13**

| | Ex. 24 | Ex. 25 | Ex. 26 | Ex. 27 | Ex. 28 |
|---|---|---|---|---|---|
| Density (g/ml) | 0.60 | 0.65 | 0.74 | 0.62 | 0.61 |

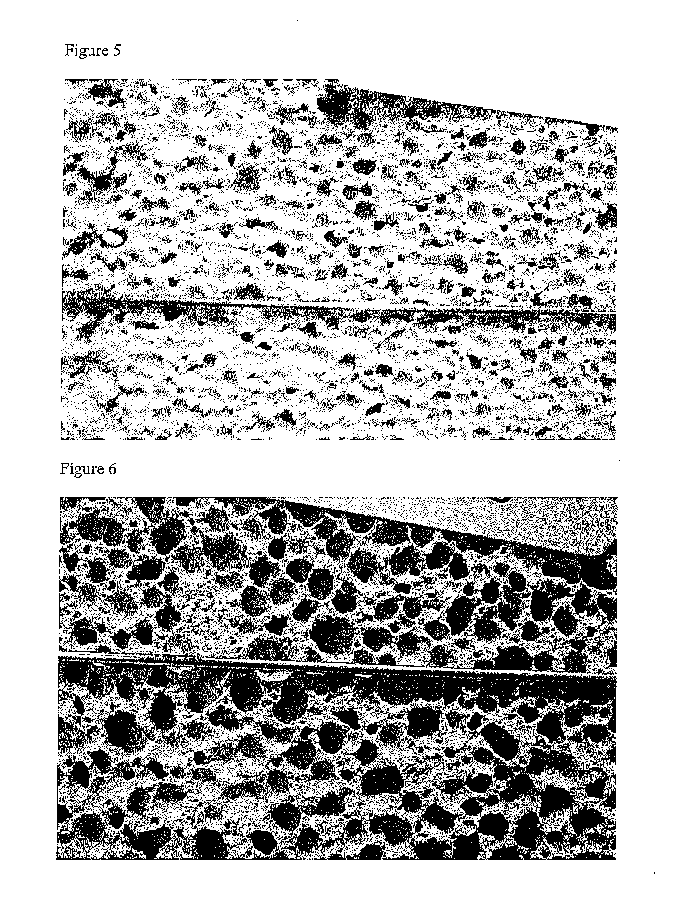

The density results of examples 24 and 25 (Figure 5) are not bad but it seems that the water ratio was too high for these mix designs as some water was present on the top of the blocks before curing. These results show that, in these mix designs, the optimal amount of Na₂CO₃ is 3% by weight of the total Dry Material and the optimal water / Dry Material ratio is around 0.43 (example 28,

Figure 6).

### Examples 29-31; pulverized fly ash, silica sand and hydrogen peroxide

Aerated concrete blocks based on the mix designs summarized in Table 14 were produced according to the procedure of examples 24-28 with the water being pre-heated at temperatures from 24 to 24.5°C.

**Table 14**

| Composition (%) | Ex. 29 | Ex. 30 | Ex. 31 |
|---|---|---|---|
| Portland cement | 14.3 | 14.3 | 14.3 |
| Lime | 3.4 | 3.4 | 3.4 |
| Gypsum | 0.68 | 0.69 | 0.68 |
| Pure silica sand | 75 | 71 | 69 |
| Pulverized fly ash of type F (PFA-F) | 5 | 10 | 15 |
| H₂O₂ | 0.44 | 0.44 | 0.44 |
| Na₂CO₃ | 3 | 3 | 3 |
| Water / Dry Material ratio | 0.44 | 0.44 | 0.44 |

The densities of the resulting blocks are summarized in Table 15.

**Table 15**

| | Ex. 29 | Ex. 30 | Ex. 31 |
|---|---|---|---|
| Density (g/ml) | 0.60 | 0.61 | 0.60 |

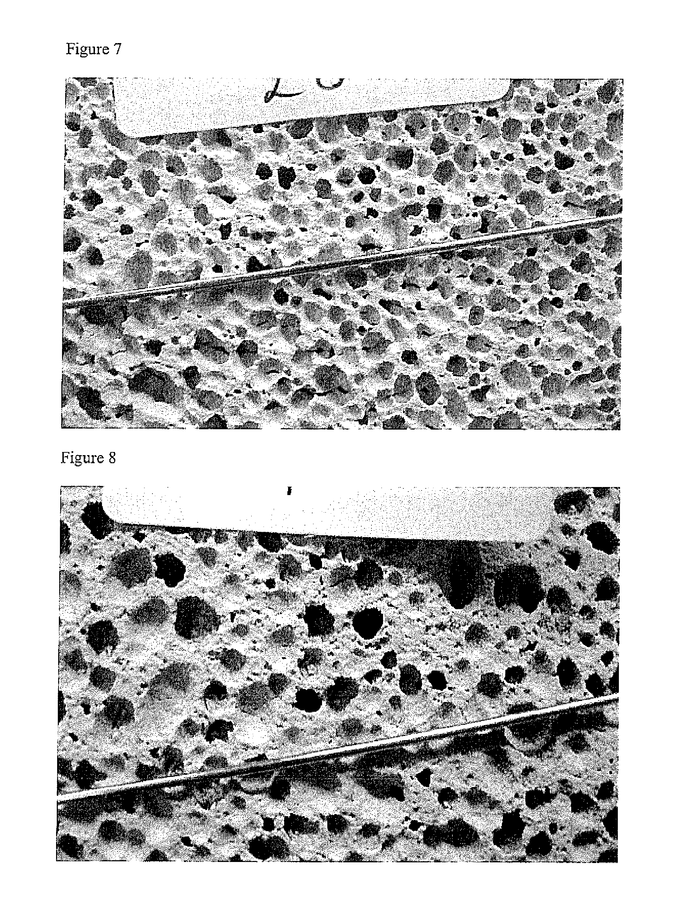

These results show that the density is more or less constant. Nevertheless, the bubble size seems to be better in example 29 (Figure 7) compared to example 31 (Figure 8).

### Examples 32-36: pulverized fly ash, silica sand and hydrogen peroxide

Aerated concrete blocks based on the mix designs summarized in Table 16 were produced according to the procedure of examples 24-28 with the water being pre-heated at temperatures from 24 to 25°C.

**Table 16**

| Composition (%) | Ex. 32 | Ex. 33 | Ex. 34 | Ex. 35 | Ex. 36 |
|---|---|---|---|---|---|
| Portland cement | 14.3 | 14.3 | 14.3 | 14.3 | 14.3 |
| Lime | 4.2 | 5.1 | 5.1 | 4.2 | 4.2 |
| Gypsum | 0.68 | 0.68 | 0.68 | 2.3 | 0.68 |
| Pure silica sand | 70 | 69 | 68 | 69 | 74 |
| Pulverized fly ash of type F (PFA-F) | 10 | 10 | 10 | 10 | 5 |
| H₂O₂ | 0.44 | 0.44 | 0.44 | 0.44 | 0.44 |
| Na₂CO₃ | 3 | 3 | 4 | 3 | 3 |
| Water / Dry Material ratio | 0.43 | 0.43 | 0.43 | 0.43 | 0.43 |

The densities of the resulting blocks are summarized in Table 17.

**Table 17**

| | Ex. 32 | Ex. 33 | Ex. 34 | Ex. 35 | Ex. 36 |
|---|---|---|---|---|---|
| Density (g/ml) | 0.57 | 0.59 | 0.81 | 0.60 | 0.60 |

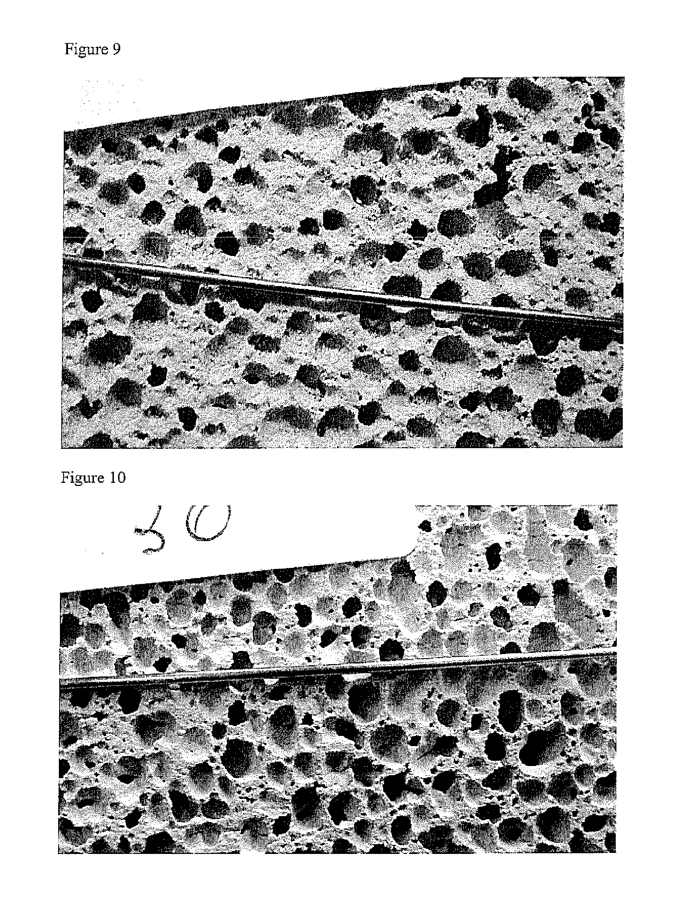

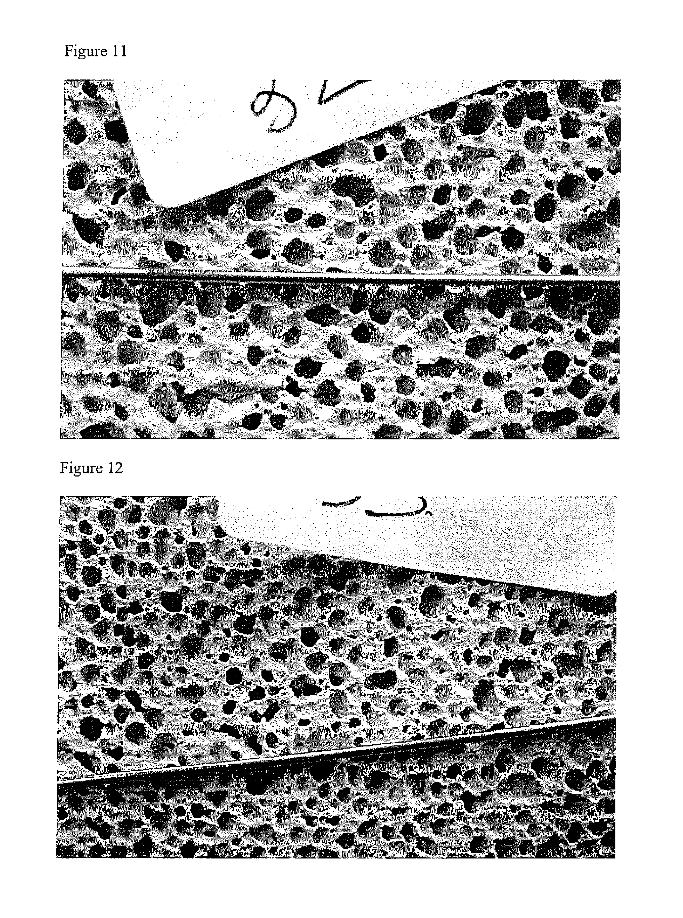

These results and the comparison of the pictures of examples 32 (Figure 9), 33 (Figure 10), 35 (Figure 11) and 36 (Figures 12) show that the better bubble size is obtained in example 36 comprising 5% PFA-C and an additional amount of lime (CaO). The bubble size of example 36 (Figure 12) is even slightly better than the bubble size of example 29 (see Figure 7).

### Short description of the figures

The figures correspond to pictures of cured aerated concrete blocks.
Figure 1: picture of cured body of example 9 (with a needle having a diameter of 1 mm)
Figure 2: picture of cured body of example 11 (with a needle having a diameter of 1 mm)
Figure 3: picture of cured body of example 16 (with a needle having a diameter of 1mm)
Figure 4: picture of cured body of example 22
Figure 5: picture of cured body of example 25 (with a needle having a diameter of 1 mm)
Figure 6: picture of cured body of example 28 (with a needle having a diameter of 1 mm)
Figure 7: picture of cured body of example 29 (with a needle having a diameter of 1 mm)
Figure 8: picture of cured body of example 31 (with a needle having a diameter of 1 mm)
Figure 9: picture of cured body of example 32 (with a needle having a diameter of 1 mm)
Figure 10: picture of cured body of example 33 (with a needle having a diameter of 1 mm)
Figure 11: picture of cured body of example 35 (with a needle having a diameter of 1 mm)
Figure 12: picture of cured body of example 36 (with a needle having a diameter of 1 mm)

## Claims

1. A process for the manufacture of aerated concrete construction materials comprising the following steps:
a. preparing a composition comprising at least water, a cementitious material, calcium oxide, a compound comprising reactive silicon dioxide, a source of oxygen, and a compound selected from sodium carbonate, sodium bicarbonate and sodium hydroxide,
b. pouring the mixture of step (a) into a mould and allowing the mixture to set, thus forming a stiffened body,
c. removing the stiffened body from the mould,
d. optionally cutting and shaping the stiffened body, and
e. curing the stiffened body.

2. The process according to claim 1, wherein the construction material is selected from blocks, bricks, lintels, slabs, beams, ceiling tiles, preferably blocks and bricks.

3. The process according to claim 1 or 2, wherein the source of oxygen is selected from hydrogen peroxide, sodium percarbonate, sodium perborate, calcium peroxide, magnesium peroxide, zinc peroxide, mixed calcium/magnesium peroxide and mixtures thereof

4. The process according to any one of claims 1 to 3, wherein the cementitious material is selected from hydraulic binders, pozzolanic materials, and mixtures thereof

5. The process according to claim 4, wherein the hydraulic binder is selected from Portland cement, calcium aluminate cements, calcium sulfoaluminate cements, pulverized fly ash of type C, hydraulic lime and mixtures thereof

6. The process according to claim 4, wherein the pozzolanic material is selected from fly ash, ground granulated blast furnace slag, silica fume, high-reactivity metakaolin, crushed fired clay brick wastes, natural pozzolans including diatomaceous earth, metakaolin, ground lapilli, rice husk ash, volcanic ash, pumicite, calcined clay or calcined shale, and mixtures thereof

7. The process according to any one claims 1 to 6, wherein the compound comprising reactive silicon dioxide is selected from sodium silicates; aluminum silicate; calcium silicates; precipitated silica; silica fume; silicate type sand, preferably ground silicate type sand or pure quartz sand, especially ground silica sand; diatomaceous earth; fly ash, especially pulverized fly ash, in particular pulverized fly ash, with higher preference pulverized fly ash of type F; ground granulated blast furnace slag and mixtures thereof.

8. The process according to any one of claims 1 to 7, wherein the composition of step (a) comprises at least one aggregate, preferably a fine aggregate, in particular an aggregate selected from sand, lapilli, fine ground dry or fired clay, crushed aerated autoclaved concrete, and mixtures thereof

9. The process according to any one of claims 1 to 8, wherein the composition of step (a) comprises at least one compound selected from limestone, calcium carbonate, gypsum, calcium sulphate hemihydrate, anhydrite and mixtures thereof.

10. The process according to any one of claims 1 to 9, wherein the composition of step (a) comprises at least one catalyst, preferably selected from
- metals and metal derivatives, preferably from transition metals and transition metal derivatives, more preferably from oxides and salts of transition metals, especially from Mn, Fe, Cu, Co, Pd and derivatives thereof in particular from MnO₂, MnSO₄, CuO FeSO₄, FeO, Fe₂O₃, FeCl₃ and KMnO₄; and
- enzymes, especially catalases.

11. The process according to any one of claims 1 to 10, wherein the composition of step (a) comprises at least one hypochlorite, preferably selected from calcium hypochlorite, sodium hypochlorite and mixtures thereof

12. The process according to any one of claims 1 to 11, wherein the composition of step (a) is prepared according to the following steps:
i. mixing, optionally in the presence of part of the water, the at least one cementitious material with the at least one compound comprising reactive silicon dioxide and with the other components optionally used in the Dry Material,
ii. adding the at least one compound selected from sodium carbonate, sodium bicarbonate and sodium hydroxide, optionally pre-mixed with part of the water, to the mixture of step (i) and homogenizing the mixture, preferably by mixing during from 1 to 600 seconds, more preferably from 5 to 300 seconds, and
iii. adding the source of oxygen and the remaining part of the water, these compounds being optionally totally or partially pre-mixed, to the mixture of step (ii), and homogenizing the mixture, preferably by mixing during from 1 to 120 seconds, more preferably from 5 to 60 seconds.

13. The process according to any one of claims 1 to 12, wherein, in step (d), the stiffened body from step (c) is cured at ambient conditions, in a climatic chamber, in an oven or in an autoclave, preferably in an autoclave.

14. Aerated concrete construction material obtainable by the process of any one of claims 1 to 13.

15. Use of an oxygen source and of at least one compound selected from sodium carbonate, sodium bicarbonate and sodium hydroxide for the manufacture of precast aerated concrete construction materials, preferably for the manufacture of precast aerated autoclaved concrete construction materials, more preferably for the manufacture of aerated concrete construction materials according to claim 14.
